# EUROPEAN PATENT APPLICATION

(11) **EP 4 742 680 A1**
(43) Date of publication of application: **13.05.2026**
(21) Application number: 24836435.8
(22) Date of filing: 04.07.2024
(51) Int. Cl.: H04N 21/43, H04N 21/8547, G06F 3/04886, G06V 10/74

(54) **VIDEO DETECTION METHOD AND APPARATUS, ELECTRONIC DEVICE, AND STORAGE MEDIUM**

(30) Priority: 06.07.2023 CN 202310828406
(71) Applicant: Lemon Inc., Grand Cayman, KY1-1205 (KY)
(72) Inventor: HE, Shengfan, Beijing 100028 (CN); QIU, Shimei, Culver City, California 90230 (US)
(74) Representative: Marks & Clerk LLP
(86) International application number: PCT/SG2024/050435
(87) International publication number: WO 2025/010029

(57) **Abstract**

Embodiments of the present disclosure provide a method and apparatus for video detection, an electronic device and a storage medium. With the method, a first video is obtained; video detection is performed based on the first video to obtain at least one second video and reference information corresponding to the second video, the second video containing at least one target video clip, the target video clip being associated with the first video, the reference information characterizing a playback position of the target video clip in the second video; a first video clip in the first video and the target video clip in the corresponding second video are synchronously played based on the reference information within a target interface.

## Description

This application claims priority to Chinese Application No. 202310828406.8 filed July 6, 2023, the disclosure of which is incorporated herein by reference in its entirety.

### FIELD

Embodiments of the present disclosure relate to the Internet technical field, and more specifically, to a method and apparatus for video detection, electronic device and storage medium.

### BACKGROUND

With the emerging of user-generated content, a large number of self-produced videos have been uploaded by users on various Internet platforms. On the one hand, platform users can get various interesting content, thereby improving user experience. On the other hand, however, self-produced videos might contain abnormal content materials, leading to security issues.

In the prior art, regarding self-produced videos uploaded by users, video platforms usually compare and detect these videos by manually comparing them frame by frame, thereby determining whether these self-produced videos contain abnormal content materials. However, the solution for detecting self-produced videos in the prior art requires manual video synchronization and comparison, giving rise to the problems of complicated interaction process and low detection efficiency.

### SUMMARY

The embodiments of the present disclosure provide a method and apparatus for video detection, an electronic device and a storage medium, so as to overcome the problems of complicated check interaction process and low detection efficiency.

In a first aspect, an embodiment of the present disclosure provides a video detection method, including: obtaining a first video; performing, based on the first video, video detection to obtain at least one second video and reference information corresponding to the second video, wherein the second video contains at least one target video clip, the target video clip is associated with the first video, and the reference information characterizes a playback position of the target video clip in the second video; and synchronously playing, within a target interface and based on the reference information, a first video clip in the first video and the target video clip in the corresponding second video.

In a second aspect, an embodiment of the present disclosure provides an apparatus for video detection, including: an obtaining module configured for obtaining a first video; a processing module for performing, based on the first video, video detection to obtain at least one second video and reference information corresponding to the second video, wherein the second video contains at least one target video clip, the target video clip is associated with the first video, and the reference information characterizes a playback position of the target video clip in the second video; and an interaction module configured for synchronously playing, within a target interface and based on the reference information, a first video clip in the first video and the target video clip in the corresponding second video.

In a third aspect, an embodiment of the present disclosure provides an electronic device, including: a processor, and a memory communicatively connected with the processor; the memory storing computer executable instructions; the processor executing the computer executable instructions stored in the memory so as to perform the method for video detection according to the first aspect and various possible designs of the first aspect.

In a fourth aspect, an embodiment of the present disclosure provides a computer readable storage medium in which computer executable instructions are stored, the computer executable instructions, when executed by a processor, performing the method for video detection according to the first aspect and various possible designs of the first aspect.

In a fifth aspect, an embodiment of the present disclosure provides a computer program product, comprising a computer program which, when executed by a processor, performs the method for video detection according to the first aspect and various possible designs of the first aspect.

With the video detection method and apparatus, electronic device and storage medium provided by the embodiments of the present disclosure, a first video is obtained; video detection is performed based on the first video to obtain at least one second video and reference information corresponding to the second video, wherein the second video contains at least one target video clip, the target video clip is associated with the first video, and the reference information characterizes a playback position of the target video clip in the second video; a first video clip in the first video and the target video clip in the corresponding second video are synchronously played based on the reference information within a target interface. By performing detection based on the first video, a second video containing a similar clip and reference information characterizing a playback position of the similar clip are obtained, and then based on the reference information, a first video clip in the first video and a target video clip in the second video are synchronously played. In this way, the objective of presenting similar clips in videos by contrast is achieved, fast detection and presentation of similar clips is realized, the interaction flow is simplified, and moreover the video detection efficiency is increased.

### BRIEF DESCRIPTION OF THE DRAWINGS

To more clearly illustrate technical solutions in the embodiments of the present disclosure or the prior art, a brief introduction is given below to the accompanying drawings used in the description of the embodiments or the prior art. Apparently, the accompanying drawings to be described below are some embodiments of the present disclosure. Those of ordinary skill in the art may further obtain other figures according to these accompanying drawings without the exercise of any inventive skill.
Fig. 1 is application scenario view of a method for video detection provided by an embodiment of the present disclosure;
Fig. 2 is a first schematic flowchart of a method for video detection provided by an embodiment of the present disclosure;
Fig. 3 is a flowchart of a specific implementation of step S102 in the embodiment shown in Fig. 2;
Fig. 4 is a flowchart of a specific implementation of step S1021 in the embodiment shown in Fig. 3;
Fig. 5 is a schematic view of the process of selecting a target image frame provided by an embodiment of the present disclosure;
Fig. 6 is a flowchart of a specific implementation of step S1022 in the embodiment shown in Fig. 3;
Fig. 7 is a schematic view of the process of detecting a to-be-detected video provided by an embodiment of the present disclosure;
Fig. 8 is a second schematic flowchart of a video detection method provided by an embodiment of the present disclosure;
Fig. 9 is a schematic view of a first playback control and a second playback control provided by an embodiment of the present disclosure;
Fig. 10 is a flowchart of a specific implementation of step S204 in the embodiment shown in Fig. 8;
Fig. 11 is a schematic view of the process of synchronously moving control elements provided by an embodiment of the present disclosure;
Fig. 12 is a structural block diagram of an apparatus for video detection provided by an embodiment of the present disclosure;
Fig. 13 is a structural schematic diagram of an electronic device provided by an embodiment of the present disclosure;
Fig. 14 is a hardware structural schematic diagram of an electronic device provided by an embodiment of the present disclosure.

### DETAILED DESCRIPTION OF EMBODIMENTS

To make the objects, technical solutions and advantages of the embodiments of the present disclosure clearer, the technical solutions in the embodiments of the present disclosure will be clearly and completely described in conjunction with the accompanying drawings. Apparently, the embodiments to be described are merely part rather than all of the embodiments of the present disclosure. All other embodiments obtained by those of ordinary skill in the art without the exercise of any inventive skill on the basis of the embodiment of the present disclosure fall within the protection scope of the present disclosure.

It should be noted that all user information (including, but not limited to, user device information, user personal information, etc.) and data (including, but not limited to, data used for analysis, data stored, data presented, etc.) involved in the present disclosure are information and data authorized by the user or fully authorized by all parties, and the collection, use, and processing of the relevant data are required to comply with the relevant laws, regulations, and standards of the relevant countries and regions, and a corresponding operation portal is provided for the user to choose to authorize or reject.

The application scenario of the embodiments of the present disclosure is explained below:

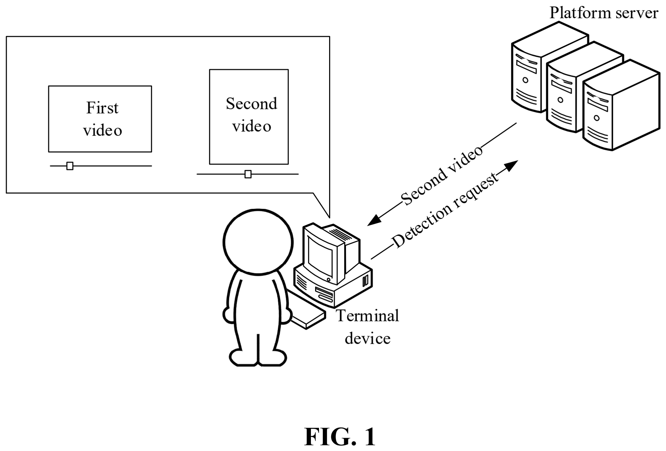

Fig. 1 is an application scenario view of a method for video detection provided by the embodiments of the present disclosure. The video detection method provided therein may be applied to an application scenario of video detection within a video platform. Specifically, as shown in Fig. 1, the method provided by the embodiments of the present disclosure may be applied to an electronic device with computing power such as a terminal device, and the electronic device may display an image through a display screen configured on itself or through an external device communicatively connected thereto. With reference to Fig. 1, the video detection method provided by the embodiments of the present disclosure may be performed by a terminal device, which communicates with a platform server. On the one hand, the terminal device obtains a first video used as a comparison video by accessing the Internet through a storage medium directly connected therewith. On the other hand, the terminal device sends a detection request to the platform server in order to detect a self-produced video stored in the platform server based on the first video to obtain a second video containing video content of the first video, the second video being, for example, a problematic vide containing abnormal content. Afterwords, the server returns the second video to the terminal device side for display, and the user on the platform side further determines whether the second video is normal by comparing the second video with the first video, and processes it accordingly.

In the prior art, regarding the detection as to whether a self-produced video uploaded by a user contains an abnormal material, besides automated detection performed on image recognition technology, the self-produced video is usually further detected by means of manual checking and then processed subsequently, in consideration of the purpose and extent of using the content material used in the self-produced video. However, in the solution for video detection in the prior art, after the detected video containing the abnormal content material is displayed on the terminal device side, staff on the platform side need to manually check an image frame in the video and compare it with a corresponding image frame in the comparison video, leading to the problems of complex checking interaction process and low detection efficiency. The embodiments of the present disclosure provide a method for video detection to solve these problems.

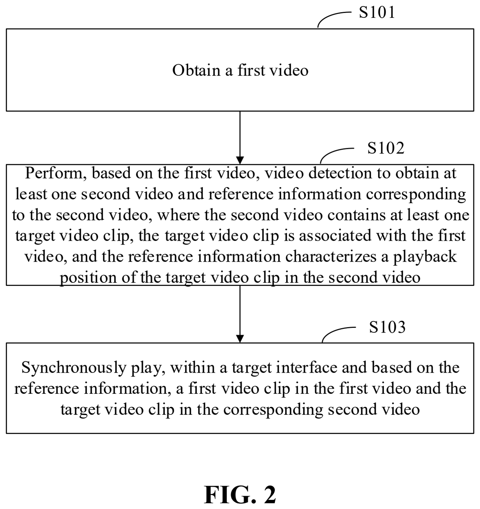

With reference to Fig. 2, this figure is a first schematic flowchart of a method for video detection provided by an embodiment of the present disclosure. The method provided by the embodiment of the present disclosure may be applied to a terminal device, e.g., a personal computer, the video detection method includes the following:
Step S101: a first video is obtained.
Step S102: video detection is performed based on the first detection to obtain at least one second video and reference information corresponding to the second video, and the second video includes at least one target video clip, the target video clip being associated with the first video, the reference information characterizing a playback position of the target video clip in the second video.

As an example, with reference to the application scenario schematic view shown in Fig. 1, after obtaining the first video based on the user operation, the terminal device first parses the first video to obtain an image feature corresponding to at least one image frame in the first video, and then may obtain at least one second video and reference information corresponding to the second video by accessing the server for storing to-be-detected videos and detecting those to-be-detected videos, and the second video is a to-be-detected video possibly containing abnormal content. The second video contains at least one target video clip, the target video clip being associated with the first video. That is, the target video clip is a similar clip to the first video clip in the first video, i.e., there is a higher similarity between the target video clip and the first video clip in the first video. It should be noted that similar clips in the present embodiment mean that two video clips contain similar video content. More specifically, if two video clips contain at least one image frame showing the same picture content, then the two video clips are similar clips. In the steps of the present embodiment, by obtaining an image feature of at least one image frame in the first video and performing a feature comparison to a special-effect feature in an image frame of the to-be-detected video based on the image feature, a similar image frame may be determined, and further a video clip containing the similar image frame may be determined as a similar clip of the first video clip, i.e., a target video clip. Further, the to-be-detected video containing the target video clip is determined as a second video.

Further, while obtaining the second video by checking, reference information corresponding to the second video is generated, and the reference information characterizes a playback position of the target video clip that is similar to the first video clip in the first video in the second video. Specifically, for example, the reference information may include a start time and an end time of the target video clip in the second video. Further, optionally, the reference information may further include a total duration of the second video, and/or, the reference information may further include a ratio of the start time of the target video clip to the total duration, and a ratio of the end time of the target video clip to the total duration. Further, in addition to the foregoing implementations, the reference information may further include a playback position corresponding to each image frame of the target video clip in the second video, e.g., a playback timestamp corresponding to each image frame. With the reference information obtained from the steps of the present embodiment, the locating of the target video clip in the second video may be realized, so that the synchronous playback of the target video clip and the first video clip in the subsequent step may be achieved.

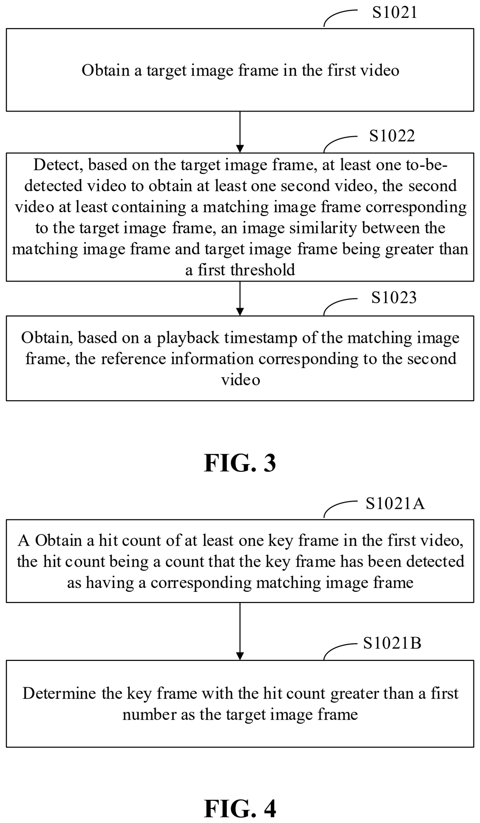

In one impossible implementation, as shown in Fig. 3, an implementation of step S102 includes the following:
Step S1021: a target image frame in the first video is obtained.
Step S1022: at least one to-be-detected video is detected based on the target image frame to obtain at least one second video, the second video at least containing a matching image frame corresponding to the target image frame, an image similarity between the matching image frame and the target image frame being greater than a first threshold.
Step S1023: reference information corresponding to the second video is obtained based on a playback timestamp of the matching image frame.

As an example, first of all, a target image frame in the first video is obtained by parsing the first video, the target image frame being, for example, one or more key frames in the first video; then, a to-be-detected video is detected based on the target image frame, the to-be-detected video being, for example, a self-produced video uploaded by a user within the platform. Specifically, by comparing the target video frame with an image frame in the to-be-detected video, an image frame in the to-be-detected video with a greater image similarity than a first threshold is determined as a matching image frame, and further the to-be-detected video containing one or more matching image frames as a second video. Afterwards, reference information corresponding to the second video is generated based on a playback timestamp of the matching image frame obtained in the foregoing steps, i.e., the reference information contains the playback timestamp of all of the matching image frames in the second video. As an example, a specific implementation of comparing the target video frame with the image frame in the to-be-detected video to obtain the image similarity may be, for example, realized by performing a feature comparison on the target video frame with the image frame in the to-be-detected video through a pre-trained neural network model. The specific implementation belongs to the prior art and is not detailed.

Further, the target image frame in the first video may be specified based on a user manual operation or determined based on a historical detection result. Specifically, as shown in Fig. 4, an implementation of step S1021 may include the following:
Step S1021A: a hit count for at least one key frame in the first video is obtained, the hit count being a count that the key frame has been detected as having the corresponding matching image frame.
Step S1021B: the key frame with the hit count greater than a first amount is determined as the target image frame.

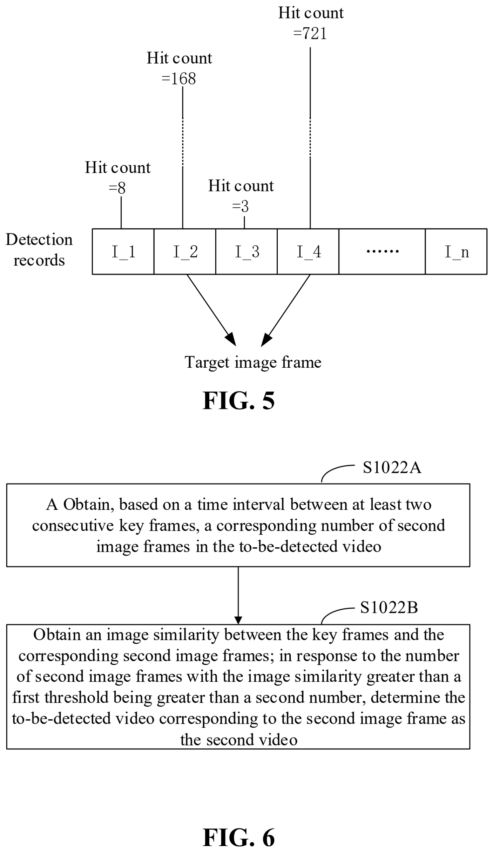

As an example, first of all, a detection record corresponding to the first video is obtained, the detection record recording a historical result of detection performed on the first video based on the method provided in the present embodiment. Further, as an example, the detection record includes a hit count corresponding to each key frame in the first video, the hit count being a count that the key frame has been detected as having the corresponding matching image frame. According to the detection record corresponding to the first video, the key frame with the hit count greater than a first amount is determined as the target image frame, or N key frames with most hit counts are determined as the target image frames. Fig. 5 is a schematic view of the process of selecting a target image frame provided by the embodiments of the present disclosure. As depicted, based on the detection record, hit counts corresponding to all the key frames (denoted as I_1 to I_n in the figure) in the first video may be obtained, for example, the hit count corresponding to I_1 equals 8, the hit count corresponding to I_2 equals 168, the hit count corresponding to I_3 equals 3, and the hit count corresponding to I_4 equals 721. Take the frame I_1 as an example, which means: in the historical detection process corresponding to a previous specified time, by using the frame I_1 to detect to-be-detected frames, a total of 8 videos have been detected as containing image content corresponding to the frame I_1, i.e., 8 to-be-detected videos containing the matching image frame. Similar operation is performed on other frames, which is not detailed here. the key frames with hit counts greater than 100, i.e., frames I_2 and I_4, are determined as the target image frames. In the subsequent step, the to-be-detected video is detected to obtain at least one second video.

Further, the target image frame includes at least two consecutive key frames in the first video. As an example, as shown in Fig. 6, an implementation of step S1022 includes the following:
Step S1022A: a corresponding number of second image frames in the to-be-detected video is obtained based on a time interval between the at least two consecutive key frames.
Step S1022B: obtaining an image similarity between the key frame and the corresponding second image frame; in response to the number of the second image frames with the image similarity greater than a first threshold being greater than a second number, determining the to-be-detected video corresponding to the second image frame as a second video.

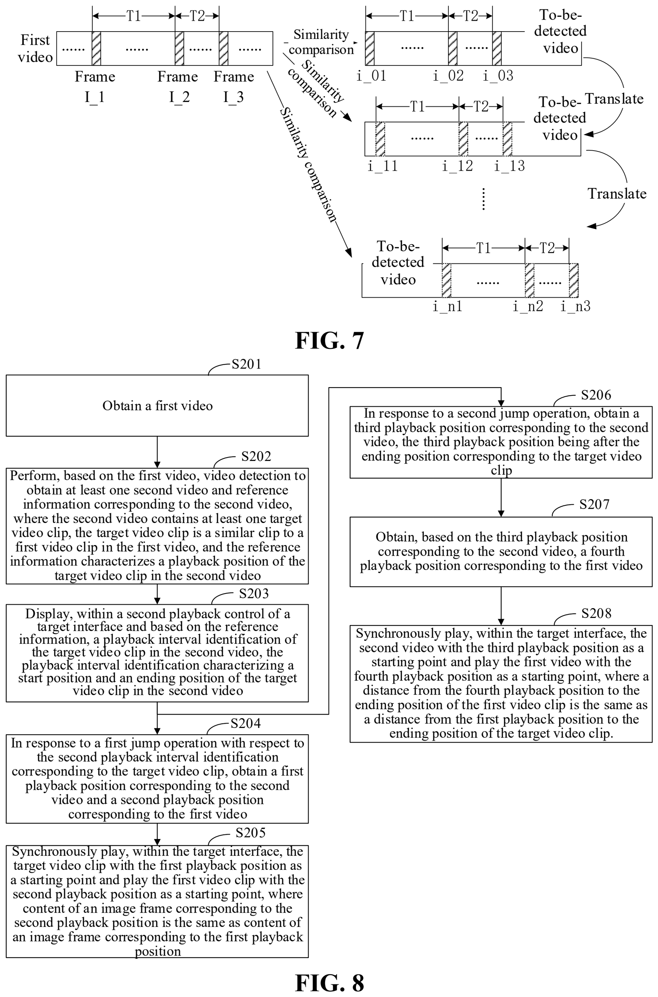

As an example, Fig. 7 is a schematic view of the process of detecting a to-be-detected video provided by the embodiments of the present disclosure. The process will be introduced with reference to Fig. 7. As depicted, the first video determined based on the previous steps includes 3 consecutive key frames (target image frames), i.e., frames I_1, I_2 and I_3 (denoted as I_1, I_2 and I_3 in the figure). Since there are also non-key frames between the key frames, there are two corresponding time intervals, e.g., time interval T1 and time interval T2 (denoted as T1 and T2 in the figure), between the I_1, I_2 and I_3 frames. Afterwards, a corresponding number of second image frames in the to-be-detected video are obtained based on the time interval T1 and the time interval T2, an image similarity between the key frame and the second image frame is obtained by comparing the key frames in the first video with the second image frames in the second video one by one, and further the second video is determined.

For example, there are the same number (3) of the second image frames as the key frames in the present embodiment. Specifically, 3 second image frames may be obtained starting from the header of the to-be-processed video based on the above time interval T1 and time interval T2, e.g., a frame i_01, a frame i_02 and a frame i_03 (denoted as i_01, i_02 and i_03) as shown in the figure. Afterwards, a plurality of translations are performed based on a preset interval (e.g., with a time interval between every two image frames as the preset interval) to obtain multiple sets of the second image frames with intervals of the time interval T1 and the time interval T2. For example, as shown in the figure, another set of second image frames, a frame i_11, a frame i_12, and a frame i_13 frames (denoted as i_11, i _12 and i_13), with intervals of the time interval T1 and the time interval T2 are obtained after translating once, till a preset ending condition is met, or the end of the to-be-detected video is reached. That is, the last set of second image frames as shown in the figure are a frame i_n1, a frame i_n2 and a frame i_n3 (denoted as i_n1, i_n2 and i_n3 in the figure).

Further, each time a set of second image frames are obtained, the key frames in the first video are subjected to a similarity comparison with the corresponding second image frames respectively to obtain the corresponding image similarities. For example, the frame I_1 is compared with the frame i_1, I_2 is compared with i_2, and I_3 is compared with i_3 respectively to obtain the corresponding image similarities S1, S2 and S3. As an example, the image similarity may be a normalized value, i.e., greater than 0 or equal to 1. The larger the similarity, the more similar between two image frames. The second image frame with the image similarity greater than the first threshold (e.g., 0.8) is determined as a similar frame. When the similar frames are more than a second number (e.g., 2), a clip formed by the frames i_1, i_2 and i_3 in the to-be-detected video is determined as a similar clip to the first video clip in the first video, and further the to-be-detected video corresponding to the second image frames is determined as the second video. The second number may be a preset value, or a value determined based on the number of key frames forming the target image frame. For example, if the number of the at least two consecutive key frames forming the target image frame is N, then the second number is N/2.

In the present embodiment, by taking a plurality of consecutive key frames in the first video as detection contrasts and utilizing the property that the at least two consecutive key frames in the first video have different time intervals, accurate multi-point detection is performed on the to-be-processed video, thereby increasing the credibility of the detected similar clips, improving the detection accuracy and reducing the occurrence probability of false detection.

Step S103: based on the reference information, a first video clip in the first video and the target video clip in the corresponding second video are synchronously played within a target interface.

As an example, after obtaining the second video containing the similar clip and the corresponding reference information based on the previous steps, a first video clip in the first video and the target video clip in the second video are synchronously played at a target interface within an application running on the terminal device. Specifically, during obtaining the second video and the corresponding reference information through the previous steps, the terminal device records the playback position of the first video clip in the first video which is used in detecting the target video clip in the second video. The playback position, for example, includes: a start position and an ending position of the first video clip, or a playback timestamp of each time frame in the first video clip corresponding to the target video clip. In a possible implementation, the corresponding playback position of the first video clip is also saved in the reference information, or saved in a local or cloud storage medium in other manner. Afterwards, based on the playback position corresponding to the first video clip and the playback position of the target video clip characterized by the reference information, the terminal device automatically locates to the start position of the first video clip and the start position of the target video clip, and starts to synchronously play the first video clip and the target video clip, thereby realizing the comparative display of the first video clip and the target video clip. Then, based on content of the comparative display of the first video clip and the target video clip within the target interface, the user may manually determine whether the two clips are completely consistent or whether the second video contains abnormal information, and process the second video, thereby manual checking of the self-produced video.

In one possible implementation, before step S103, there are further included:
Step S1001: a variable-speed coefficient corresponding to the target video clip is obtained, the variable-speed coefficient characterizing a video content playback rate of the target video clip relative to the first video clip.
Step S1002: a target playback speed of the first video clip is obtained according to the variable-speed coefficient.

Accordingly, an implementation of step S103 includes: playing the first video clip in the first video within the target interface based on the target playback speed.

As an example, the variable-speed coefficient corresponding to the target video clip characterizes the video content playback rate of the target video clip relative to the first video clip. For example, when the variable-speed coefficient is 2, the variable-speed coefficient characterizes that the playback rate of the target video clip is twice that of the first video clip, i.e., the target video clip has undergone the fast-forward variable speed processing. Meanwhile, since the target video clip has the same video content as the first video clip, the duration of the target video clip is half that of the first video clip. For another example, when the variable-speed coefficient is 0.5, the variable-speed coefficient characterizes that the playback rate of the target video clip is half that of the first video clip, and accordingly, the duration of the target video clip is twice that of the first video clip.

If the target video clip has undergone variable speed processing, the playback rate of the target video clip is different from that of the first video clip in normal playback situation, making it difficult to synchronously play the two clips. Concerning the problem, the terminal device may, after determining the target video clip based on the video content, obtain the variable-speed coefficient based on the comparison between the duration of the target video clip and the duration of the target video clip, and when playing the first video clip, further perform variable speed playback based on the variable speed coefficient, so that the playback speeds for the target video clip and the first video clip become same, and synchronous playback is realized. Of course, in a further possible implementation, the target video clip may also be played at a corresponding reverse variable speed based on the variable-speed coefficient, such that the first video clip and the target video clip have the same playback rate, and synchronous playback is realized. This is not limited here.

In the present embodiment, a first video is obtained; video detection is performed based on the first video to obtain at least one second video and reference information corresponding to the second video, the second video containing at least one target video clip, the target video clip being associated with the first video, the reference information characterizing a playback position of the target video clip in the second video; a first video clip in the first video and the corresponding video clip in the second video are synchronously played within a target interface based on the reference information. Through detection based on the first video, the second video containing a similar clip and the reference information characterizing the playback position of the similar clip are obtained, and afterwards, the first video clip in the first video and the target video clip in the second video are synchronously played based on the reference information. In this way, the objective of comparative display of similar clips in the videos is achieved, fast detection and display of similar clips is realized, the interaction flow is simplified, and further the video detection efficiency is increased.

With reference to Fig. 8, this figure is a second schematic flowchart of a video detection method provided by an embodiment of the present disclosure. The present embodiment further refines step S103 on the basis of the embodiment shown in Fig. 2, the method for video detection including the following:
Step S201: a first video is obtained.
Step 202: video detection is performed based on the first video to obtain at least one second video and reference information corresponding to the second video, the second video containing at least one target video clip, the target video clip being associated with the first video, the reference information characterizing a playback position of the target video clip in the second video.
Step S203: a playback interval identification of the target video clip in the second video is played within a second playback control of a target interface based on the reference information, the playback interval identification being used for characterizing a start position and an ending position of the target video clip in the second video.

As an example, a first playback control corresponding to the first video and/or a second playback control corresponding to the second video are/is arranged within the target interface. In a possible implementation, the first playback control is used for controlling the playback of the first video, specifically, e.g., controlling the start, pause and jump of the playback of the first video, the first playback control may comprise a video playback area for playing the first video and a control area for setting functional controls. The second playback control can achieve the same functions as the first playback control. The appearance layout of the second playback control may be the same as or different than that of the first playback control, depending on specific needs. The implementation of the functions and appearance layout of the second playback control is not detailed here, which may refer to the introduction to the first playback control.

Optionally, on the other hand, the method according to the present embodiment further includes: displaying, within a first playback control of the target interface, a playback interval identification of the target video clip in the first video based on a playback position of a first video clip, the playback interval identification being used for characterizing a start position and an ending position of the first video clip in the first video. That is, the first playback control can achieve the same functions as the second playback control, which is not detailed here.

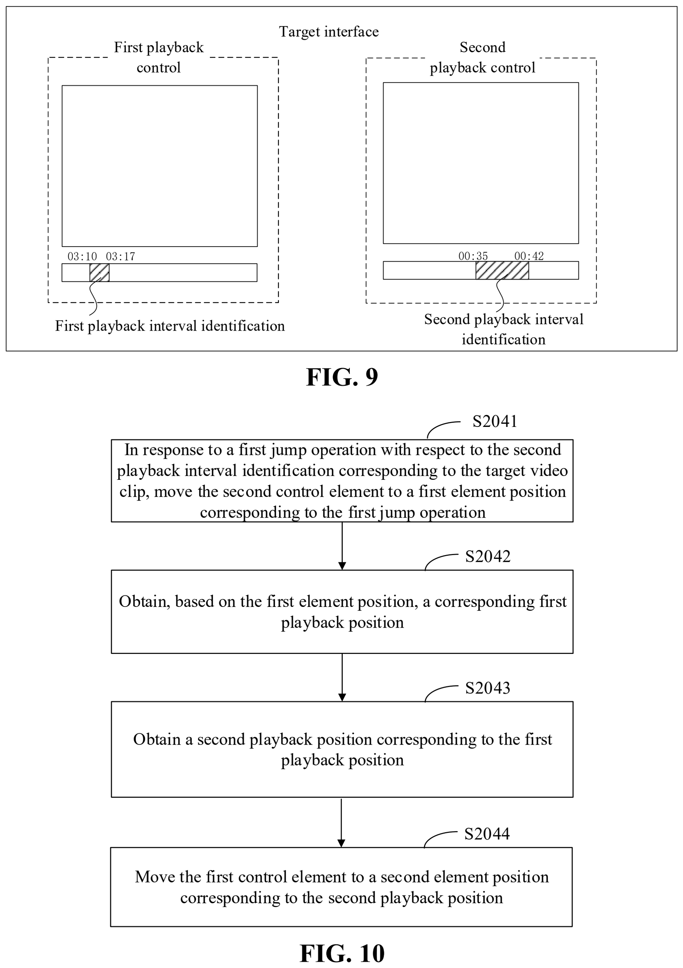

Fig. 9 is a schematic view of a first playback control and a second playback control provided by an embodiment of the present disclosure. As depicted, within the target interface, the first playback control is used for playing the first video, and the second playback control is used for playing the second video. After the corresponding reference information and the playback position corresponding to the first video are obtained, a second playback interval identification of the target video clip in the second video is displayed within the second playback control based on the reference information, the second playback interval identification being used for characterizing the start position (denoted as 00:35, representing the 35^{th} second of the second video) and the ending position (denoted as 00:42, representing the 42^{nd} second of the second video) of the target video clip in the second video. A first playback interval identification of the first video clip in the first video is displayed within the first playback control based on the playback position of the first video clip, the first playback interval identification being used for characterizing the start position (denoted as 03:10, representing minute 3 second 10 of the first video) and the ending position (denoted as 03:17, representing minute 3 second 17 of the first video) of the first video clip in the first video.

In the steps of the present embodiment, the ratio of the similar clip in the first video and/or the second video is displayed by displaying the corresponding playback interval identification within the first playback control and/or the second playback control. Optionally, a ratio of the duration characterized by the playback interval identification to the total duration of the first video and/or the second video may further be displayed within the first playback control and/or the second playback control, e.g., displaying "12%" within the first playback control, which characterizes that the duration of the first video clip accounts for 12% of the total duration of the first video.

Step S204: in response to a first jump operation performed on the second playback interval identification corresponding to the target video clip, the first playback position corresponding to the second video and the second playback position corresponding to the first video are obtained.

Further, as an example, the first playback control is used for jump-playing a first target content in the first video clip in response to a first triggering operation. The second playback control is used for playing the same first target content in the target video clip in response to the first triggering operation, which is an operation with respect to the first playback control or the second playback control. That is, when the user triggers, by operating the terminal device, either the first playback control or the second playback control to play the first target content, the other playback control will be automatically and synchronously triggered to play the first target content, so that the first video clip and the target video clip will be synchronously played to realized the synchronous presentation of similar clips.

Optionally, the first playback control includes a movable first control element, and the second playback control includes a movable second control element. As an example, as shown in Fig. 10, a specific implementation of step S204 includes the following:
Step S2041: in response to a first jump operation performed to the second playback interval identification corresponding to the target video clip, the second control element is moved to a first element position corresponding to the first jump operation.
Step S2042: a corresponding first playback position is obtained based on the first element position.
Step S2043: obtaining the second playback position corresponding to the first playback position.
Step S2044: the first control element is moved to a second element position corresponding to the second playback position.

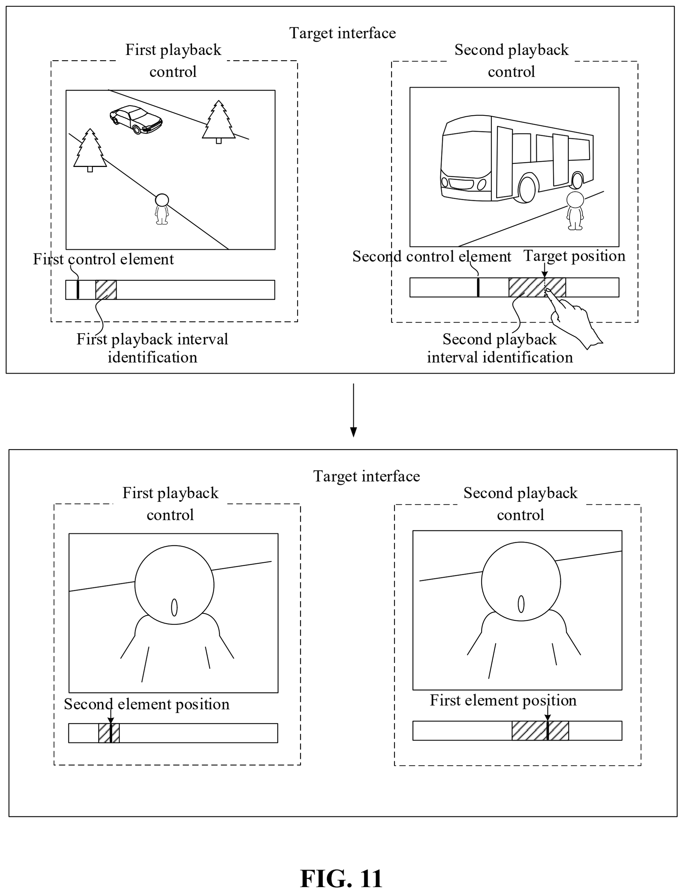

As an example, Fig. 11 is a schematic view of the process of synchronously moving control elements provided by an embodiment of the present disclosure. The process will be introduced in conjunction with Fig. 11. As depicted, when the terminal device receives a first jump operation with respect to the second playback interval identification corresponding to the second video, e.g., clicking on a target position within the second playback interval identification or dragging the second control element to the target position within the second playback interval identification, the terminal device moves the second control element to a first element position corresponding to the first jump operation, i.e., the foregoing target position. Afterwards, based on mapping information of the movement amount of the control element to the corresponding value provided by the second playback control, the terminal device obtains a playback position of the second video corresponding to the first element position, i.e., a first playback position. Further, based on the mapping relation between various image frames in the first video clip and the target video clip contained in the reference information, the terminal device obtains a first image frame in the first video corresponding to the second image frame at the first playback position in the second video, and then obtains a second playback position of the first image frame in the first video according to a playback timestamp corresponding to the first image frame. Further, based on the mapping information of the movement amount of the control element to the corresponding value provided by the first playback control, a second element position corresponding to the second playback position is obtained, and the first control element corresponding to the first video is moved to the second element position, so that similar clips (i.e., the first video clip and the target video clip) played by the first video and the second video are synchronized. Moreover, the synchronous movement of control elements (the first control element and the second control element) within the first playback control and the second playback control is realized.

Optionally, the first playback control further comprises a third control element, and the second playback control further comprises a fourth control element. The third control element is used for separately controlling a playback position of the first video, realizing the jump playback of the first video. The fourth control element is used for separately controlling a playback position of the second video, realizing the jump playback of the second video. In conjunction with the first control element and the third control element or in conjunction with the second control element and the fourth control element, separate or synchronous jump playback of the first video and the second video may be realized, thereby increasing the manual detection efficiency for self-produced videos.

In the present embodiment, when the terminal device responds to a user operation and jumps to video playback within a similar clip (first video clip or target video clip), the playback contents of the first video clip and the target video clip are made consistent, thereby realizing the alignment of the playback contents of similar clips between the first video and the second video without requiring the user to manually adjust the playback position for video content alignment, and improving the efficiency of video detection.

Step S205: within the target interface, synchronously playing the target video clip with the first playback position as the start point and playing the first video clip with the second playback position as the start point, the content of the image frame corresponding to the second playback position being the same as that of the image frame corresponding to the first playback position.

After the first playback position and the second playback position are obtained, the target video clip and the first video clip are synchronously played with the first playback position and the second playback position as the starting point, respectively. Through the foregoing steps, the first playback position and the second playback position point to the consistent content of the image frame currently to be played. Therefore, after starting the playback of the first video clip and the target video clip, the content of the image frame corresponding to the second playback position is the same as that of the image frame corresponding to the first playback position, thereby achieving the objective of presenting similar clips in the first video and the second video in a comparative way.

Optionally, after step S203, there is further included:
Step S206: in response to a second jump operation, a third playback position corresponding to the second video is obtained , the third playback position being after the ending position corresponding to the target video clip.
Step S207: according to the third playback position corresponding to the second video, a fourth playback position corresponding to the first video is obtained.
Step S208: within the target interface, the second video with the third playback position as the starting point and the first video with the fourth playback position as the starting point are synchronously played, a distance from the fourth playback position to the ending position of the first video clip being the same as a distance from the first playback position to the ending position of the target video clip.

As an example, in a further possible implementation, after step S203, the terminal device receives a second jump operation with respect to the second video inputted by the user, a target position corresponding to the second jump operation being before the ending position corresponding to the target video clip. Specifically, the specific implementation process of the step may be, for example: in response to a first jump operation with respect to an area outside the second playback interval identification corresponding to the target video clip, the terminal device moving the second control element to a third element position corresponding to the first jump operation and further obtaining a third playback position corresponding to the second video based on the third element position. A specific implementation of the process is similar to that of obtaining the first playback position in the previous steps, which is not detailed here.

After the second jump operation is triggered, a playback pointer moves to the third playback position from a current position, and afterwards, a backward distance between the third playback position and the ending position of the target video clip is obtained, the backward distance characterizing the time that the third playback position has moved backward from the ending position of the target video clip. Next, based on the backward distance, the third playback position moves backward by the backward distance from the ending position of the first video clip in the first video, thereby obtaining the fourth playback position corresponding to the first video. The corresponding movement of the control element involved in the process is similar to that of the first control element and the second control element in the previous embodiment, which is not detailed here. Then, the second video and the first video are synchronously played with the third playback position and the fourth playback position as the starting point, respectively, thereby realizing the synchronous comparative playback of the video content of similar clips in the first video and the second video and improving the overall detection efficiency for the second video.

In a further possible implementation, in response to a second jump operation, a third playback position corresponding to the second video is obtained, the third playback position being before the start position corresponding to the target video clip. According to third playback position corresponding to the second video, a fourth playback position corresponding to the first video is obtained. Afterwards, within the target interface, the second video and the first video are synchronously played with the third playback position and the fourth playback position as the starting point, respectively, a distance from the fourth playback position to the start position of the first video clip being the same as a distance from the first playback position to the start position of the target video clip. In the steps of the present embodiment, a target position for video adjustment triggered by the second jump operation is before the target video clip. The specific implementation principle is similar to that in the previous embodiment where the target position is after the target video clip, which is not detailed here.

Optionally, after synchronously playing the target video clip and the first video clip or synchronously playing the first video and the second video, there is further included: in response to a pause operation, pausing the playback of the target video clip and the first video clip at the same time, or synchronously pausing the playback of the first video and the second video.

In the present embodiment, the implementation of steps S201 and S202 is the same as that of steps S101 and S102 in the foregoing embodiment. For detailed description, please refer to the description of steps S101 and S102, which is not detailed here.

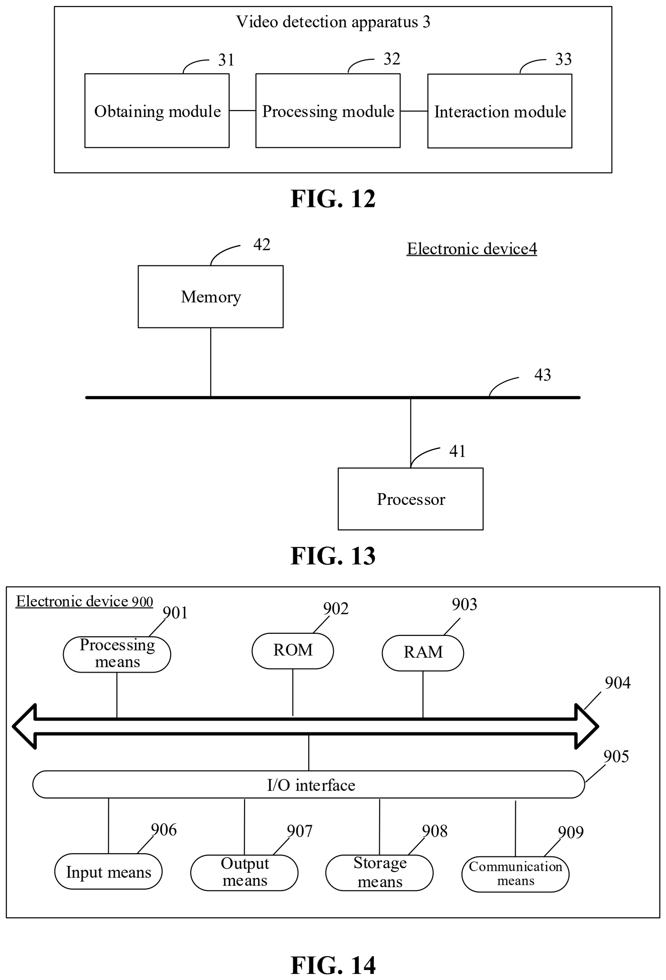

Corresponding to the method for video detection of the embodiments above, Fig. 12 shows a structural block diagram of an apparatus for video detection provided by an embodiment of the present disclosure. Only parts related to the embodiment of the present disclosure are shown for the sake of illustration. With reference to Fig. 12, a video detection apparatus 3 includes: an obtaining module 31; a processing module 32; and an interaction module 33.

The obtaining module 31 is configured for obtaining a first video.

The processing module 32 is configured for performing, based on the first video, video detection to obtain at least one second video and reference information corresponding to the second video, the second video containing at least one target video clip, the target video clip being associated with the first video, the reference information characterizing a playback position of the target video clip in the second video.

The interaction module 33 is configured for synchronously playing, based on the reference information and within a target interface, a first video clip in the first video and the target video clip in the corresponding second video.

In an embodiment of the present disclosure, a first playback control corresponding to the first video and/or a second playback control corresponding to the second video are/is arranged within the target interface. The first playback control is used for, in response to a first triggering operation, jump-playing target content in the first video clip. The second playback control is used for, in response to the first triggering operation, playing the target content in the target video clip, the first triggering operation being an operation with respect to the first playback control or the second playback control.

In an embodiment of the present disclosure, the interaction module 33 is used for: displaying, based on the reference information and within the second playback control of the target interface, a playback interval identification of the target video clip in the second video, the playback interval identification characterizing a start position and an ending position of the target video clip in the second video; in response to a first jump operation with respect to the playback interval identification, obtaining a corresponding first playback position; synchronously playing, within the target interface, the target video clip with the first playback position as the starting point and the first video clip with a second playback position as the starting point, content of an image frame corresponding to the second playback position being the same as content of an image frame corresponding to the first playback position.

In an embodiment of the present disclosure, the first playback control includes a movable first control element, and the second playback control includes a movable second control element; the interaction module 33, when obtaining the corresponding first playback position in response to the first jump operation with respect to the playback interval identification, is specifically used for: in response to the first jump operation with respect to the playback interval identification, moving the second control element to a first element position corresponding to the first jump operation; and obtaining a corresponding first playback position based on the first element position. The interaction module 33 is further used for: obtaining the second playback position corresponding to the first playback position; and moving the first control element to a second element position corresponding to the second playback position.

In an embodiment of the present disclosure, the interaction module 33 is further used for: in response to a second jump operation, obtaining a corresponding third playback position, the third playback position being after the ending position corresponding to the target video clip; synchronously playing, within the target interface, the second video with the third playback position as the starting point and the first video with a fourth playback position as the starting point, a distance from the fourth playback position to an ending position of the first video clip being the same as a distance from the first playback position to the ending position of the target video clip.

In an embodiment of the present disclosure, the processing module 32 is used for: obtaining a target image frame in the first video; detecting at least one to-be-detected video based on the target image frame to obtain at least one second video, the second video at least containing a matching image frame corresponding to the target image frame, an image similarity between the matching image frame and the target image frame being larger than a first threshold; and obtaining, based on a playback timestamp of the matching image frame, the reference information corresponding to the second video.

In an embodiment of the present disclosure, the processing module 32, when obtaining a target image frame in the first video, is used for: obtaining a hit count of at least one key frame in the first video, the hit count being the count that the key frame has been detected as having the corresponding matching image frame; determining a key frame with the hit count greater than a first number as the target image frame.

In an embodiment of the present disclosure, the target image frame comprises at least two consecutive key frames in the first video; the processing module 32, when detecting at least one to-be-detected video based on the target image frame to obtain at least one second video, is used for: obtaining a corresponding number of second image frames in the to-be-detected video based on a time interval between the at least two consecutive key frames; obtaining an image similarity between the key frame and the corresponding second image frame; in response to the number of second image frames with the image similarity greater than the first threshold being greater than a second number, determining the to-be-detected video corresponding to the second image frame as the second video.

In an embodiment of the present disclosure, the processing module 32 is further used for: obtaining a variable-speed coefficient corresponding to the target video clip, the variable-speed coefficient characterizing a video content playback rate of the target video clip relative to the first video clip; and obtaining a target playback rate of the first video clip according to the variable-speed coefficient. The interaction module is used for: playing a first video clip in the first video based on the target playback rate within the target interface.

The obtaining module 31, the processing module 32 and the interaction module 33 are connected in this order. The apparatus for video detection 3 provided by the present disclosure may implement the technical solution of the foregoing method embodiment, with similar implementation principles and technical effects, which is not detailed in the present disclosure.

Fig. 13 is a structural schematic diagram of an electronic device provided by an embodiment of the present disclosure. As depicted, the electronic device 4 includes the following: a processor 41, and a memory 42 communicatively connected with the processor 41.

### The memory 42 stores computer executable instructions.

The processor 41 executes the computer executable instructions stored in the memory 42 to perform the method for video detection in the embodiments as shown in Figs. 2 to 11.

Optionally, the processor 41 and the memory 42 are connected via a bus 43.

Relevant illustration may be understood with reference to the description and effects corresponding to the steps in embodiments as shown in Figs. 2 to 11, which is not detailed here.

An embodiment of the present disclosure provides a computer readable storage medium where computer executable instructions are stored, the computer executable instructions, when executed by a processor, used for performing the method for video detection provided by any of the embodiments corresponding to Figs. 2 to 11 of the present disclosure.

An embodiment of the present disclosure provides a computer program product, including computer program which, when executed by a processor, performing the method for video detection provided by any embodiment as shown in Figs. 2 to 11.

With reference to Fig. 14, this figure shows a structural schematic diagram of an electronic device 900 suitable for implementing the embodiments of the present disclosure. The electronic device 900 may be a terminal device or a server. The terminal device may include, without limitation to, a mobile terminal such as a mobile phone, a laptop computer, a digital broadcast receiver, a PDA (personal digital assistant), a PAD (tablet computer), a PMP (portable multimedia player), an on-board terminal (e.g., on-board navigation terminal)and the like, as well as a fixed terminal such as a digital TV, a desktop computer and the like. The electronic device shown in Fig. 14 is merely an example and should not be construed to impose any limitations on the functionality and use scope of the embodiments of the present disclosure.

As shown in Fig. 14, the electronic device 900 may includes processing means (e.g., a central processor, a graphics processor) 901 which is capable of performing various appropriate actions and processes in accordance with programs stored in a read only memory (ROM) 902 or programs loaded from storage means 908 to a random access memory (RAM) 903. In the RAM 903, there are also stored various programs and data required by the electronic device 900 when operating. The processing means 901, the ROM 902 and the RAM 903 are connected to one another via a bus 904. An input/output (I/O) interface 905 is also connected to the bus 904.

Usually, the following means may be connected to the I/O interface 905: input means 906 including a touch screen, a touch pad, a keyboard, a mouse, a camera, a microphone, an accelerometers, a gyroscope, or the like; output means 907, such as a liquid-crystal display (LCD), a loudspeaker, a vibrator, or the like; storage means 908, such as a magnetic tape, a hard disk or the like; and communication means 909. The communication means 909 allows the electronic device 900 to perform wireless or wired communication with other device so as to exchange data with other device. While Fig. 14 shows the electronic device 900 with various means, it should be understood that it is not required to implement or have all of the illustrated means. Alternatively, more or less means may be implemented or exist.

Specifically, according to the embodiments of the present disclosure, the procedures described with reference to the flowchart may be implemented as computer software programs. For example, the embodiments of the present disclosure comprise a computer program product that comprises a computer program embodied on a non-transitory computer-readable medium, the computer program including program codes for executing the method shown in the flowchart. In such an embodiment, the computer program may be loaded and installed from a network via the communication means 909, or installed from the storage means 908, or installed from the ROM 902. The computer program, when executed by the processing means 901, perform the above functions defined in the template recommendation method of the embodiments of the present disclosure.

It is noteworthy that the computer readable medium of the present disclosure can be a computer readable signal medium, a computer readable storage medium or any combination thereof. The computer readable storage medium may be, for example, but is not limited to, an electronic, magnetic, optical, electromagnetic, infrared or semiconductor system, apparatus or device, or any combination of the foregoing. More specific examples of the computer readable storage medium may include, without limitation to, the following: an electrical connection with one or more conductors, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer readable storage medium may be any tangible medium including or storing a program that may be used by or in conjunction with an instruction executing system, apparatus or device. In the present disclosure, the computer readable signal medium may include data signals propagated in the baseband or as part of the carrier waveform, in which computer readable program code is carried. Such propagated data signals may take a variety of forms, including without limitation to electromagnetic signals, optical signals, or any suitable combination of the foregoing. The computer readable signal medium may also be any computer readable medium other than a computer readable storage medium that may send, propagate, or transmit a program for use by, or in conjunction with, an instruction executing system, apparatus, or device. The program code contained on the computer readable medium may be transmitted by any suitable medium, including, but not limited to, a wire, a fiber optic cable, RF (radio frequency), etc., or any suitable combination thereof.

The above computer readable medium may be contained in the above electronic device; or it may exist separately and not be assembled into the electronic device.

The above computer readable medium carries one or more programs which, when executed by the electronic device, cause the electronic device to perform the method described in the above embodiments.

Computer program code for carrying out operations of the present disclosure may be written in one or more program designing languages or a combination thereof, which include without limitation to an object oriented programming language such as Java, Smalltalk, C++ or the like, and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Units involved in the embodiments of the present disclosure as described may be implemented in software or hardware. The name of a unit does not form any limitation on the module itself. For example, the first obtaining unit may further be described as "a unit for obtaining at least two Internet protocol addresses."

The functionality described above may at least partly be performed, at least in part, by one or more hardware logic components. For example and in a non-limiting sense, exemplary types of hardware logic components that can be used include: field-programmable gate arrays (FPGA), application specific integrated circuits (ASICs), application specific standard products (ASSPs), systems on chips (SOCs), complex programmable logic devices (CPLDs), etc.

In the context of the present disclosure, the machine readable medium may be a tangible medium that can retain and store programs for use by or in conjunction with an instruction execution system, apparatus or device. The machine readable medium of the present disclosure can be a machine readable signal medium or a machine readable storage medium. The machine readable medium may include, but is not limited to, an electronic, magnetic, optical, electromagnetic, infrared or semiconductor system, apparatus or device, or any combination of the foregoing. More specific examples of the machine readable storage medium may include, without limitation to, the following: an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

In a first aspect, a method for video detection is provided according to one or more embodiments of the present disclosure, comprising: obtaining a first video; performing, based on the first video, video detection to obtain at least one second video and reference information corresponding to the second video, wherein the second video contains at least one target video clip, the target video clip is associated with the first video, and the reference information characterizes a playback position of the target video clip in the second video; and synchronously playing, within a target interface and based on the reference information, a first video clip in the first video and the target video clip in the corresponding second video.

According to one or more embodiments of the present disclosure, a first playback control corresponding to the first video and/or a second playback control corresponding to the second video are/is arranged within the target interface, wherein the first playback control is used for, in response to a first triggering operation, jump-playing target content in the first video clip; and the second playback control is used for, in response to the first triggering operation, playing the target content in the target video clip, the first triggering operation being an operation with respect to the first playback control or the second playback control.

According to one or more embodiments of the present disclosure, synchronously playing, based on the reference information, the first video clip in the first video and the target video clip in the corresponding second video comprises: displaying, within the second playback control of the target interface and based on the reference information, a playback interval identification of the target video clip in the second video, the playback interval identification characterizing a start position and an ending position of the target video clip in the second video; in response to a first jump operation with respect to the playback interval identification, obtaining a corresponding first playback position; synchronously playing, within the target interface, the target video clip with the first playback position as the starting point and the first video clip with the second playback position as the starting point, wherein content of an image frame corresponding to the second playback position is the same as content of an image frame corresponding to the first playback position.

According to one or more embodiments of the present disclosure, the first playback control comprises a movable first control element, and the second playback control comprises a movable second control element; obtaining the corresponding first playback position in response to the first jump operation with respect to the playback interval identification comprises: in response to a first jump operation with respect to the playback interval identification, moving the second control element to a first element position corresponding to the first jump operation; and obtaining, based on the first element position, a corresponding first playback position; the method further comprising: obtaining the second playback position corresponding to the first playback position; and moving the first control element to a second element position corresponding to the second playback position.

According to one or more embodiments of the present disclosure, the method further comprises: in response to a second jump operation, obtaining a corresponding third playback position, the third playback position being after the ending position corresponding to the target video clip; and synchronously playing, within the target interface, the second video with the third playback position as the starting point and playing the first video with a fourth playback position as the starting point, wherein a distance from the fourth playback position to the ending position of the first video clip is equal to a distance from the first playback position to the ending position of the target video clip.

According to one or more embodiments of the present disclosure, performing, based on the first video, the video detection to obtain at least one second video and the reference information corresponding to the second vide comprises: obtaining a target image frame in the first video; detecting, based on the target image frame, at least one to-be-detected video to obtain at least one second video, the second video at least containing a matching image frame corresponding to the target image frame, an image similarity between the matching image frame and the target image frame being greater than a first threshold; and obtaining, based on a playback timestamp of the matching image frame, the reference information corresponding to the second video.

According to one or more embodiments of the present disclosure, obtaining the target image frame in the first video comprises: obtaining a hit count of at least one key frame in the first video, the hit count being a count that the key frame has been detected as having a corresponding matching image frame; and determining a key frame with the hit count greater than a first number as the target image frame.

According to one or more embodiments of the present disclosure, the target image frame comprises at least two consecutive key frames in the first video; detecting, based on the target image frame, the at least one to-be-detected video to obtain at least one second video comprises: obtaining, based on a time interval between the at least two consecutive key frames, a corresponding number of second image frames in the to-be-detected video; and obtaining an image similarity between the key frames and the corresponding second image frame; in response to the number of second image frames with the image similarity greater than the first threshold being greater than a second number, determining the to-be-detected video corresponding to the second image frame as the second video.

According to one or more embodiments of the present disclosure, the method further comprises: obtaining a variable-speed coefficient corresponding to the target video clip, the variable-speed coefficient characterizing a video content playback rate of the target video clip relative to the first video clip; and obtaining a target playback speed of the first video clip according to the variable-speed coefficient; wherein synchronously playing, within the target interface, the first video clip in the first video and the target video clip in the corresponding second video comprising: playing, based on the target playback speed and within the target interface, the first video clip in the first video.

In a second aspect, an apparatus for video detection is provided according to one or more embodiments of the present disclosure, comprising: an obtaining module configured for obtaining a first video; a processing module configured for performing, based on the first video, video detection to obtain at least one second video and reference information corresponding to the second video, wherein the second video contains at least one target video clip, the target video clip is associated with the first video, the reference information characterizes a playback position of the target video clip in the second video; and an interaction module configured for synchronously playing, within a target interface and based on the reference information, a first video clip in the first video and the target video clip in the corresponding second video.

According to one or more embodiments of the present disclosure, a first playback control corresponding to the first video and/or a second playback control corresponding to the second video are/is arranged within the target interface, wherein the first playback control is used for, in response to a first triggering operation, jump-playing target content in the first video clip; the second playback control is used for, in response to the first triggering operation, playing the target content in the target video clip, the first triggering operation being an operation with respect to the first playback control or the second playback control.

According to one or more embodiments of the present disclosure, the interaction module is used for: displaying, within the second playback control of the target interface, a playback interval identification of the target video clip in the second video based on the reference information, the playback interval identification characterizing a start position and an ending position of the target video clip in the second video; in response to a first jump operation with respect to the playback interval identification, obtaining a corresponding first playback position; and synchronously playing, within the target interface, the target video clip with the first playback position as the starting point and the first video clip with the second playback position as the starting point, wherein content of an image frame corresponding to the second playback position is the same as content of an image frame corresponding to the first playback position.

According to one or more embodiments of the present disclosure, the first playback control comprises a movable first control element, and the second playback control comprises a movable second control element; the interaction module, when obtaining a corresponding first playback position in response to a first jump operation with respect to the playback interval identification, is used for: in response to a first jump operation with respect to the playback interval identification, moving the second control element to a first element position corresponding to the first jump operation; and obtaining a corresponding first playback position based on the first element position; the interaction module being further used for: obtaining the second playback position corresponding to the first playback position; and moving the first control element to a second element position corresponding to the second playback position.

According to one or more embodiments of the present disclosure, the interaction module is further used for: in response to a second jump operation, obtaining a corresponding third playback position, the third playback position being after the ending position corresponding to the target video clip; and synchronously playing, within the target interface, the second video with the third playback position as the starting point and the first video with a fourth playback position as the starting point, wherein a distance from the fourth playback position to the ending position of the first video clip is equal to a distance from the first playback position to the ending position of the target video clip.

According to one or more embodiments of the present disclosure, the processing module is used for: obtaining a target image frame in the first video; detecting at least one to-be-detected video based on the target image frame to obtain at least one second video, the second video at least containing a matching image frame corresponding to the target image frame, an image similarity between the matching image frame and the target image frame being greater than a first threshold; and obtaining the reference information corresponding to the second video based on a playback timestamp of the matching image frame.

According to one or more embodiments of the present disclosure, the processing module, when obtaining a target image frame in the first video, is used for: obtaining a hit count of at least one key frame in the first video, the hit count being a count that the key frame has been detected as having a corresponding matching image frame; and determining a key frame with the hit count greater than a first number as the target image frame.

According to one or more embodiments of the present disclosure, the target image frame comprises at least two consecutive key frames in the first video; the processing module, when detecting at least one to-be-detected video based on the target image frame to obtain at least one second video, is used for: obtaining a corresponding number of second image frames in the to-be-detected video based on a time interval between the at least two consecutive key frames; and obtaining an image similarity between the key frames and the corresponding second image frame; in response to the number of second image frames with the image similarity greater than the first threshold being greater than a second number, determining the to-be-detected video corresponding to the second image frame as the second video.

According to one or more embodiments of the present disclosure, the processing module is further used for: obtaining a variable-speed coefficient corresponding to the target video clip, the variable-speed coefficient characterizing a video content playback rate of the target video clip relative to the first video clip; and obtaining a target playback speed of the first video clip according to the variable-speed coefficient; and the interaction module is used for: playing the first video clip in the first video based on the target playback speed within the target interface.

In a third aspect, an electronic device is provided according to one or more embodiments of the present disclosure, comprising: a processor, and a memory communicatively connected with the processor; the memory storing computer executable instructions; the processor executing the computer executable instructions stored in the memory so as to perform the method for video detection according to the first aspect and various possible designs of the first aspect.

In a fourth aspect, a computer readable storage medium is provided according to one or more embodiments of the present disclosure, the computer readable storage medium storing computer executable instructions which, when executed by a processor, perform the method for video detection according to the first aspect and various possible designs of the first aspect.

In a fifth aspect, an embodiment of the present disclosure provides a computer program product, comprising a computer program which, when executed by a processor, performs the method for video detection according to the first aspect and various possible designs of the first aspect.

The foregoing description is merely illustration of the preferred embodiments of the present disclosure and the technical principles used herein. Those skilled in the art should understand that the disclosure scope involved therein is not limited to the technical solutions formed from a particular combination of the above technical features, but should also cover other technical solutions formed by any combination of the above technical features or their equivalent features without departing from the above disclosure concepts, e.g., technical solutions formed by replacing the above features with technical features having similar functions disclosed (without limitation) in the present disclosure.

In addition, although various operations have been depicted in a particular order, it should not be construed as requiring that the operations be performed in the particular order shown or in sequential order of execution. Multitasking and parallel processing may be advantageous in certain environments. Likewise, although the foregoing discussion includes several specific implementation details, they should not be construed as limiting the scope of the present disclosure. Some features described in the context of separate embodiments may also be realized in combination in a single embodiment. On the contrary, various features described in the context of a single embodiment may also be realized in multiple embodiments, either individually or in any suitable sub-combinations.

While the present subject matter has been described using language specific to structural features and/or method logic actions, it should be understood that the subject matter defined in the appended claims is not necessarily limited to the particular features or actions described above. On the contrary, the particular features and actions described above are merely exemplary forms of realizing the claims.

## Claims

1. A method for video detection, comprising:
obtaining a first video;
performing, based on the first video, video detection to obtain at least one second video and reference information corresponding to the second video, wherein the second video contains at least one target video clip, the target video clip is associated with the first video, and the reference information characterizes a playback position of the target video clip in the second video; and
synchronously playing, within a target interface and based on the reference information, a first video clip in the first video and the target video clip in the corresponding second video.

2. The method according to claim 1, wherein at least one of a first playback control corresponding to the first video or a second playback control corresponding to the second video is arranged within the target interface, wherein the first playback control is used for, in response to a first triggering operation, jump-playing target content in the first video clip; and the second playback control is used for, in response to the first triggering operation, playing the target content in the target video clip, the first triggering operation being an operation with respect to the first playback control or the second playback control.

3. The method according to claim 1, wherein the target video clip is associated with the first video, comprising: the target video clip having a high similarity with the first video clip in the first video.

4. The method according to claim 2, wherein synchronously playing, based on the reference information, the first video clip in the first video and the target video clip in the corresponding second video comprises:
displaying, within the second playback control of the target interface and based on the reference information, a playback interval identification of the target video clip in the second video, the playback interval identification characterizing a start position and an ending position of the target video clip in the second video;
in response to a first jump operation with respect to the playback interval identification, obtaining a corresponding first playback position; and
synchronously playing, within the target interface, the target video clip with the first playback position as a starting point and the first video clip with the second playback position as a starting point, wherein content of an image frame corresponding to the second playback position is the same as content of an image frame corresponding to the first playback position.

5. The method according to claim 4, wherein the first playback control comprises a movable first control element, and the second playback control comprises a movable second control element; wherein in response to the first jump operation with respect to the playback interval identification, obtaining a corresponding first playback position comprises:
in response to a first jump operation with respect to the playback interval identification, moving the second control element to a first element position corresponding to the first jump operation; and
obtaining, based on the first element position, a corresponding first playback position; and
the method further comprising:
obtaining the second playback position corresponding to the first playback position; and
moving the first control element to a second element position corresponding to the second playback position.

6. The method according to claim 4, further comprising:
in response to a second jump operation, obtaining a corresponding third playback position, the third playback position being after the ending position corresponding to the target video clip; and
synchronously playing, within the target interface, the second video with the third playback position as a starting point and the first video with a fourth playback position as a starting point, wherein a distance from the fourth playback position to the ending position of the first video clip is equal to a distance from the first playback position to the ending position of the target video clip.

7. The method according to claim 1, wherein performing, based on the first video, video detection to obtain at least one second video and reference information corresponding to the second vide comprises:
obtaining a target image frame in the first video;
detecting, based on the target image frame, at least one to-be-detected video to obtain at least one second video, the second video at least containing a matching image frame corresponding to the target image frame, an image similarity between the matching image frame and the target image frame being greater than a first threshold; and
obtaining, based on a playback timestamp of the matching image frame, the reference information corresponding to the second video.

8. The method according to claim 7, wherein obtaining the target image frame in the first video comprises:
obtaining a hit count of at least one key frame in the first video, the hit count being a count that the key frame has been detected as having a corresponding matching image frame; and
determining a key frame with the hit count greater than a first number as the target image frame.

9. The method according to claim 7, wherein the target image frame comprises at least two consecutive key frames in the first video; wherein detecting, based on the target image frame, the at least one to-be-detected video to obtain at least one second video comprises:
obtaining, based on a time interval between the at least two consecutive key frames, a corresponding number of second image frames in the to-be-detected video; and
obtaining an image similarity between the key frames and the corresponding second image frames; in response to the number of second image frames with the image similarity greater than the first threshold being greater than a second number, determining the to-be-detected video corresponding to the second image frame as the second video.

10. The method according to claim 1, further comprising:
obtaining a variable-speed coefficient corresponding to the target video clip, the variable-speed coefficient characterizing a video content playback rate of the target video clip relative to the first video clip; and
obtaining, according to the variable-speed coefficient, a target playback speed of the first video clip; and
wherein synchronously playing, within a target interface, a first video clip in the first video and the target video clip in the corresponding second video comprises:
playing, based on the target playback speed and within the target interface, the first video clip in the first video.

11. A video detection apparatus comprising:
an obtaining module for obtaining a first video;
a processing module for performing, based on the first video, video detection to obtain at least one second video and reference information corresponding to the second video, wherein the second video contains at least one target video clip, the target video clip is associated with the first video, and the reference information characterizes a playback position of the target video clip in the second video; and
an interaction module for synchronously playing, within a target interface and based on the reference information, a first video clip in the first video and the target video clip in the corresponding second video.

12. An electronic device comprising:
a processor, and a memory communicatively coupled to the processor;
the memory stores computer-executed instructions;
the processor executes the memory-stored computer-executed instructions to implement the video detection method according to any of claims 1 to 10.

13. A computer-readable storage medium having stored therein computer-executable instructions which, when executed by a processor, implement the video detection method as claimed in any one of claims 1 to 10.

14. A computer program product, comprising a computer program which, when executed by a processor, carries out the video detection method as claimed in any of claims 1 to 10.
